## Europäisches Patentamt
## European Patent Office
## Office européen des brevets

(11) Publication number: **0 040 824**
**B1**

(12) **EUROPEAN PATENT SPECIFICATION**

(45) Date of publication of patent specification: **28.11.84**

(51) Int. Cl.³: **B 29 D 27/00**, B 29 H 7/20, B 60 R 13/06, E 06 B 7/23

(21) Application number: **81103915.5**

(22) Date of filing: **21.05.81**

(54) Process for continuously manufacturing bi-compound shaped articles and the bi-compound shaped articles so obtained.

(30) Priority: **23.05.80 IT 2227980**

(43) Date of publication of application:
**02.12.81 Bulletin 81/48**

(45) Publication of the grant of the patent:
**28.11.84 Bulletin 84/48**

(84) Designated Contracting States:
**BE DE FR GB NL**

(56) References cited:
**CH-A- 480 571**
**FR-A-1 287 590**
**FR-A-1 596 956**
**FR-A-2 092 000**
**FR-A-2 271 918**
**FR-A-2 375 515**
**GB-A- 929 332**
**US-A-3 127 640**
**US-A-4 206 165**

(73) Proprietor: **SMAE-SOCIETA' MERIDIONALE ACCESSORI ELASTOMERICI S.p.A**
**Agglomerato Industriale**
**Battipaglia (Salerno) (IT)**

(72) Inventor: **Perini, Valerio**
**Via Piave Palazzo Santese**
**Battipaglia (Salerno) (IT)**

(74) Representative: **Gernhardt, Claus, Dipl.-Ing.**
**Dr. Elisabeth Jung Dr. Jürgen Schirdewahn**
**Dipl.-Ing. Claus Gernhardt Patentanwälte**
**Clemensstrasse 30**
**D-8000 München 40 (DE)**

Courier Press, Leamington Spa, England.

## Description

The present invention concerns bi-compound shaped articles comprising a first part of elastomeric and/or plastomeric material and a second part of foam material. Bi-compound shaped articles of this type can particularly be applied to the edges of openings for sealing purposes.

Known processes for manufacturing bi-compound shaped articles of said type are discontinuous processes. In fact, said processes provide for either separate manufacturing of each of the two parts of the bi-compound shaped article (first part of elastomeric or plastomeric material—and the second part of foam material) and successively attaching them together by means of appropriate adhesives, or producing the first part inside the same mould where said second part is manufactured.

In the first case, the first part made of elastomeric or plastomeric material is extruded and successively vulcanized and cut to size. Said second part made of foamed material is instead foamed in a mould having an appropriate shape.

Once both of said parts are ready, they are assembled together manually with suitable adhesives, with an eventual preparation (rasping) of the surface along which the contact has to take place.

In the second case, the first part made of elastomeric or plastomeric material is extruded and vulcanized and successively inserted into a mould. Into said mould the foamable material is poured, and during the foaming and reticulation phase it becomes attached to said first part in such a way as to obtain the finished shaped article.

As an alternative to this procedure there can be inserted into the mould a piece of raw or unvulcanized elastomeric or plastomeric material, and the vulcanization is carried out at the same time of the expansion and reticulation of the foamable material constituting said second part.

Therefore, said known processes for manufacturing bi-compound shaped articles from a compact high hardness material and from foamable material, all present the drawback of being discontinuous processes which require a longer time, besides considerable manual work.

The known bi-compound shaped articles also present drawbacks resulting from their discontinuous manufacturing processes, such as for example the drawback of having a particular weak point where tears or cuts easily start, namely exactly in the area where said two parts are attached to each other. This takes place to a greater degree in the case of those bi-compound shaped articles having said first part apt for anchoring the shaped article itself, and said second part apt for effecting a seal, for example by bending.

There is also known a bi-compound shaped article of the above-mentioned type (FR—A—1 596 956), in which the two simultaneously extruded compounds forming the two parts are connected to each other along the transition zone of the two parts. However, with this kind of connection it is not possible to obtain great stability of the connection for all possible applications.

From US—A—3,127,640 a bi-compound shaped article is known comprising a first part of elastomeric or plastomeric material and a second part of foam material, the first part comprising a thin-walled tube enclosing the second part.

Therefore, one aim of the present invention is to provide a bi-compound shaped article which overcomes the drawbacks of the known bi-compound shaped articles, i.e. that will have in particular an excellent connection or bond between the two parts formed by the different compounds, so as to increase the service life of the shaped article itself.

In order to reach this aim, a bi-compound shaped article comprising a first part of elastomeric and/or plastomeric material and a second part of foam material is characterized, in accordance with the invention, in that said second part is provided with means for anchoring it to said first part, said means being a compact skin that totally covers said second part and that at least partially covers said first part.

A shaped article according to the invention presents numerous advantages with respect to the known shaped articles and achieves the prefixed aims. In fact, the bi-compound shaped articles according to the invention can be utilized for example on the lower edge of motor vehicle doors and are easily connected to said doors by means of the first part. In fact, said first part, since it has a greater hardness, is also rigid and can easily be formed and utilized as an anchoring element for said second part which is the flexible part that provides the sealing. At the same time, an excellent connection or bond is obtained between the two parts of the shaped article, provided by the compact skin described above. In fact, the compact outer skin actually protects the transition zone between the two parts of the shaped article. The continuity of said skin allows that the transition zone remains protected on both of its sides, thus preventing that shear or tearing forces, located in said zone succeed in breaking the bi-compound shaped article by causing cuts or lacerations in this very delicate zone.

A preferred embodiment of the bi-compound shaped article according to the invention is characterized in that said first part comprises a compound of an elastomeric and plastomeric material based on a styrene polymer, on a terpolymer E.P.D.M. (ethylene-propylene-diene monomer), or natural rubber and phenolic resin, and that said second part is a compound based on E.P.D.M. containing a blow agent.

The first part has preferably a Shore-A hardness of not less than 95°.

Another preferred embodiment of a bi-compound shaped article according to the invention is characterized by the fact that said first part has a substantially rectangular form and is provided at one of its extremities with a step that projects from one of its greater sides, and that the second part of foam material projects from said first part and forms an extension of said step.

According to a further preferred embodiment of a bi-compound shaped article of the invention, the second part departs from a step provided with laterally rounded-off edges, till covering the step on both of its sides.

The present invention concerns also a process for the manufacture of a bi-compound shaped article according to the invention which process comprises:

—simultaneously extruding the compound forming the first part and the foamable compound forming the second part,

—forming a skin around said second part and at least partially around said first part, and

—subjecting the thus formed article to heat to vulcanize said first part and simultaneously drawing said outer skin around said second part

The present invention will be better understood by the following detailed description made just by way of a non-limiting example and referring to the Figures of the attached drawing sheet, wherein:

Fig. 1 shows schematically a plant for carrying out the process according to the present invention,

Fig. 2 shows a section of the bi-compound shaped article at three distinct stages of the continuous process for manufacturing bi-compound shaped articles according to the present invention, and

Fig. 3 shows an enlarged detail of the zone of attachment between the two different compounds of the bi-compound shaped article according to the present invention.

In the more general idea of a solution of a continuous process for manufacturing bi-compound shaped articles according to the present invention, said process comprises the phases of extruding a shaped article comprising at least one part of foamable material, and at least another part of elastomeric and/or plastomeric material, to form an outer skin around said part of foamable material, to vulcanize the elastomeric or plastomeric material, and simultaneously to draw the outer skin around the part of foamable material.

In particular, the process according to the present invention comprises for extruding the bi-compound shaped articles the phases mentioned below.

In the present invention, by bi-compound shaped article is meant a shaped article having at least two distinct parts, each of which being formed by a different compound. Hence, the process according to the present invention has, for the first phase, the extrusion of the bi-compound shaped article by means of an extruder provided with two feeders for the two parts of the shaped article. In particular, a first phase of the process according to the present invention provides for the extrusion of a bi-compound shaped article having a first part of elastomeric or plastomeric material, and a second part of formable material.

Successively, the process according to the present invention presents a second phase of forming an outer skin around said second part of foamable material. Preferably said second phase of forming the outer skin around said second part of the shaped article is effected immediately after its leaving the mouth of the extruder, by the surface reaction of the foamable material itself with the surrounding atmosphere. The successive phase provides for the vulcanization of the first part of the shaped article itself, formed of elastomeric or plastomeric material and contemporaneously, the blowing or foaming of the material enclosed by said outer skin that surrounds said second part of the shaped article, so as to stretch the outer skin itself.

Said phase of drawing said outer skin over the second part of the shaped article takes place for preference by the foaming of the foamable material itself. Both the said vulcanization of said first part of the shaped article as well as the drawing of the outer skin disposed around said second part is preferably carried out in a known molten salt bath. Said bath provides the necessary heat for obtaining both said vulcanization as well as the blowing or foaming.

Successively, still inside the molten salt bath there takes place the reticulation of the foamable material of said second part, thanks always to the heat provided by the said salt bath.

The finished bi-compound shaped article is successively drawn out of the molten salt bath and moved to a cutting and/or storing device.

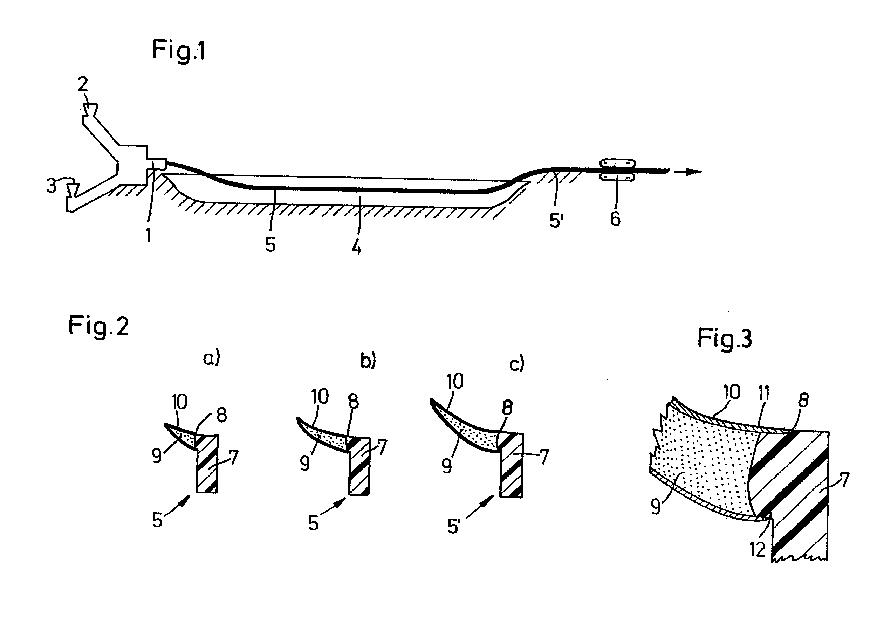

In Fig. 1 there is shown schematically a plant for carrying out the process according to the present invention just as described hereabove. Said plant comprises an extruder 1 provided with two distinct feeders 2 and 3, one for the elastomeric or plastomeric material compound and the other for the foamable material.

At the discharge opening of the extrusion head of the extruder 1 there is present a molten salt bath 4 (like the one previously indicated) within which the extruded element 5 is vulcanized as far as the elastomeric or plastomeric part is concerned, whereas the foam material part is foamed and recticulated, as will be described further on in this text in more detail. Said molten salt bath 4 is provided with means (known per se, and not shown in the Figure) for maintaining it at a given temperature.

Downstream of the molten salt bath 4 there is present a drawing device 6 that takes out the bi-compound shaped article 5' from the bath 4 itself and moves it (in the direction indicated by the arrow) either to a cutting device (not shown) where the extruded article is cut to size, or to a suitable container (not shown) where the extruded article is stored.

The present invention also comprises, as already stated, a bi-compound shaped article produced through the above-described process.

In its more general idea said bi-compound shaped article comprises a first part of elastomeric and or plastomeric material, a second part of foam material, and means for anchoring said second part to said first part said means being a continuous compact outer skin that entirely covers the said second part and which extends partially over said first part, and which is joined to the surface of said first part.

Said compact outer skin and its joining to said first part of the bi-compound shaped article will be described in detail further on when referring to Fig. 3.

In Fig. 2 there are shown three distinct stages in the production of a bi-compound shaped article 5' (or extruded element 5) according to the present invention. In particular, Fig. 2a shows a section of the extruded element 5 as it is when just leaving the extruder. Fig. 2b shows a section of said extruded element 5 as it is in the molten salt bath 4. Fig. 2c shows a section of the finished bi-compound shaped article 5', i.e. as it is leaving the molten salt bath 4.

In said Fig. 2a the extruded element 5 is provided with a first part 7 of elastomeric or plastomeric material. Said material forming said first part 7 is preferably a compound of an elastomeric material and of a plastomeric material based on a styrene polymer, on a terpolymer E.P.D.M. (ethylene-propylene-diene monomer), or natural rubber and phenolic resin. As an alternative said first part 7 can be of any whatsoever elastomeric or plastomeric material having a Shore-A hardness greater than 95°, and which maintains said hardness even up to temperatures of 80°C.

A further alternative provides that said first part 7 embeds within it a resistant insert of a type known per se. Said first part 7 of the extruded element 5 has a form that is, for example, rectangular with a small step 8 at one extremity and only on one of its own greater sides. From said step 8 there departs said second part 9 of the extruded element 5. Said second part 9 is of a foam material, such as for example a compound based on polychloroprene or E.P.D.M. containing a suitable blowing agent, and at the stage shown in said Fig. 2a it is already provided with a continuous compact outer skin 10.

Said compact outer skin 10 completely surrounds the second part 9 of foamable material, obviously except for the side of said second part 9 that is adjacent to the step 8 present on said first part 7, and it extends to said step as will be described further on when referring to Fig. 3.

In Fig. 2b there is shown a section of the extruded element 5 as it results inside the molten salt bath 4.

As can easily be seen, the blowing of said second part 9 has partly taken place, and the outer skin 10 has been drawn over it, while still maintaining substantially the form or shape which it was given on issuing from the extrusion head and which remained unaltered as such (i.e. in the outline) but not as regards its dimensions. In Fig. 2c there is shown the finished bi-compound shaped article 5' as it will be on leaving the molten salt bath 4.

Said bi-compound shaped article 5' has its first part 7 of vulcanized elastomeric or plastomeric material while the second part 9 has the outer skin 10 already drawn and the foamable material, which caused said drawing, is reticulated. Said outer skin 10 has been drawn and therefore it has expanded in a uniform manner, while maintaining substantially the same outline which it had at the time it issued from the extruder head and which was stably given to it through the surface reaction of the foamable material itself.

As can easily be seen in Fig. 3, in which the joining zone between the different mixtures of the bi-compound shaped article 5' is shown enlarged, i.e. where said second part 9 extends, in cantilever fashion from said first part 7, said compact outer skin 10 extends along the surface of said step 8, provided preferably with laterally rounded-off edges till covering the step on both of its sides 11 and 12.

There is thus achieved that said compact outer skin 10 covers partially the said first part 7 of elastomeric or plastomeric material of the bi-compound shaped article 5'. Said compact outer skin 10 provides an anchorage for said second part 9 of foamable material.

The thus obtained shaped article 5' present numerous advantages with respect to the known shaped articles and achieves the prefixed aims. In fact, the bi-compound shaped articles according to the invention can be utilized for example on the lower edge of motor vehicle doors and it is easily connected to said doors by means of the first part 7. In fact, said first part 7, since it has a greater hardness, is also rigid and can easily be formed and utilized as an anchoring element for said second part 9 which is the flexible part that provides the sealing. Previously the shaped articles that were used for this purpose were one-compound shaped articles, and for fixing these to their seats, they were locked between two rigid, usually metallic plates which were usually screwed into position in their seats.

Said known shaped articles, however, always presented the drawback of being easily breakable in the connection zone between the portion which has to effect the sealing and that portion fixed between the rigid plates, since the variation in the flexibilities between said parts takes place in a very abrupt manner, and normally in the vicinity of sharp corners that make still easier the starting and the propagation of tears and cuts.

The bi-compound shaped articles 5' according to the present invention on the contrary overcome these drawbacks, since the connection between the first and second parts 7,9, in being effected during the vulcanization/foaming-reticulation of each single part that goes to form it, provides an excellent connection between the parts 7,9 themselves, because said two parts 7,9 despite being of different compounds practically form a single body.

If the zone of connection or bonding between these two parts 7,9 is subjected even to considerable shearing stresses, no cuts or ruptures are produced where the two parts 7,9 themselves are joined together. Besides this the presence of the means for anchoring the second part 9 to the first part 7 renders the bonding even stronger.

In fact, the compact outer skin 10 that extends along the step 8 present on the first part 7, actually protects the transition zone between said two parts 7,9 of the bi-compound shaped article 5'. The continuity of said skin 10 allows that the transition zone remains protected on both of its sides, thus preventing that shear or tearing forces, located in said zone, succeed in breaking the bicompound shaped article 5' by causing cuts or lacerations in this very delicate zone.

In fact, this outer skin 10 superimposes two continuous surfaces exactly in the transition zone, one surface being on each side of the step 8, thereby welding together the two parts 7,9. Moreover, the rounded edges present on both sides of said step 8 favorise during the extrusion of the shaped article itself a greater covering of the step 8 itself by the outer skin 10, since the material that goes to form said outer skin 10 can distend better on said surface and so cover a greater portion of it.

Moreover, said rounded edges increase the contacting surface between said two parts 7,9 of the bi-compound shaped article 5' itself, so as to have a larger area where said two parts can be fixed together. In this manner a better fixing or bonding can be obtained that is more durable and stable, since the stresses that would tend to separate said two parts 7,9 become distributed over a greater area with a consequent lower stress per unit area.

With the process according to the present invention can be produced bi-compound shaped articles which achieve the pre-fixed aims as previously indicated.

The process according to the present invention also achieves the pre-fixed aims since it is a continuous process, different from all the known processes, which allows savings, both from the point of view of production, as well as manual labour involved.

Moreover, the continuous process according to the present invention guarantees a uniform finished product having constant characteristics, as only can be guaranteed by continuous processes, since the operative conditions remain constant with the passing of time. The excellent characteristics of the finished product in particular as regards the strong binding between the two parts 7,9, having different compounds of the bi-compound shaped articles 5' itself, and the continuity guaranteed by the compact skin 10 that surrounds said second part 9 and anchors it to said first part 7, can be provided only with a continuous process of extrusion and vulcanization/foaming-reticulation, such as that described before.

As a matter of fact the simultaneous extrusion of the two parts 7,9 having different compounds of the bi-compound shaped article itself, consents the extrusion of material that, on becoming a skin 10, covers at least partially also the first part 7 of the bi-compound shaped article 5' itself. In this way, the covering of the said first part 7 can be controlled with the quantity of skin 10 and for the extension that is best for the particular form and use to which the shaped article itself will be subjected.

Although there have been illustrated and described several particular embodiments of the continuous process for manufacturing bi-compound shaped articles and the bi-compound shaped articles so obtained with said process, it has to be understood that all variations are possible within the scope of the claims.

In particular, the bi-compound shaped article illustrated in the drawing has not to be taken as being limitative of the type of bi-compound profile that can be obtained by using the continuous process according to the present invention, but this has been indicated solely by way of a non-limiting example, since any type of bi-compound shaped article provided with at least one part of foam material can be obtained by the process according to the present invention.

Moreover, although in the text of the present invention only bi-compound shaped articles have been mentioned, what has to be included in the scope of the present invention are those shaped articles comprising two or more compounds provided that at least one of said compounds is a foamable material.

Moreover, it has to be noted that the presence of the step 8 is necessary only for the particular form assumed by the bi-compound shaped article 5' shown in the Figures, since the width of the base of said second part 9 is lower than the dimensions of the side of said first part 7 from which the said second part 9 extends in cantilever fashion.

If said second part had the width of its base equal to the width of the side of said first part from which it extends in cantilever fashion, the presence of the step would no longer be necessary, since said base and said step would coincide.

## Claims

1. Bi-compound shaped article comprising a first part (7) of elastomeric and/or plastomeric material and a second part (9) of foam material, characterized in that said second part (9) is provided with means for anchoring it to said first part (7), said means being a skin (10) that totally covers said second part (9) and that at least partially covers said first part (7).

2. Bi-compound shaped article according to claim 1, characterized in that said first part (7) comprises a compound of an elastomeric and a plastomeric material based on a styrene polymer, on a terpolymer E.P.D.M. (ethylene-propylene-diene monomer), or natural rubber and phenolic resin, and that said second part (9) is a compound based on E.P.D.M containing a blow agent.

3. Bi-compound shaped article according to claim 1 or 2, characterized in that said first part (7) has a Shore-A hardness of not less than 95°.

4. Bi-compound shaped article according to any one of the preceding claims, characterized by the fact that said first part (7) has a substantially rectangular form and is provided at one of its extremities with a step (8) that projects from one of its greater sides, and that the second part (9) of foam material projects from said first part (7) and forms an extension of said step (8).

5. Bi-compound shaped article according to any one of the preceding claims, characterized in that the second part (9) departs from the step (8) provided with laterally rounded-off edges and that the skin (10) extends along the surface of said step (8) till covering the step on both of its sides (11, 12).

6. A continuous process for manufacturing bi-compound shaped articles according to any one of claims 1 to 5, comprising:

simultaneously extruding the compound forming the first part (7) and the formable compound forming the second part (9),
forming a skin (10) around said second part (9) and at least partially around said first part (7), and
subjecting the thus formed article to heat to vulcanize said first part (7) and simultaneously drawing said outer skin (10) around said second part (9).

## Revendications

1. Objet de profil constitué de deux matériaux avec une première partie (7) consistant en un matériau élastomère et/ou plastomère et une deuxième partie (9) en mousse, caractérisé en ce que la deuxième partie (9) comporte des moyens destinés à son ancrage sur la première partie susmentionnée (7) et que ces moyens sont représentés par une pellicule (10), qui couvre la deuxième partie (9) d'une manière intégrale et la première partie (7) d'une manière au moins partielle.

2. Objet de profil constitué de deux matériaux suivant la revendication 1, caractérisé en ce que la première partie (7) présente une masse constituée d'un matériau élastomère et d'une matériau plastomère à base d'un polymère au styrène, d'un terpolymère E.P.D.M. (Monomères diènes de propylène et d'éthylène) ou d'un caoutchouc naturel et de résine de phénol et que la deuxième partie (9) est une masse à la base de E.P.D.M., qui comporte un agent gonfleur.

3. Objet de profil constitue de deux matériaux suivant la revendication 1 ou 2, caractérisé en ce que la première partie (7) présente une dureté Shore A d'au moins de 95°.

4. Objet de profil constitué de deux matériaux suivant l'une quelconque des revendications précédentes, caractérisé en ce que la première partie (7) présente essentiellement une forme rectangulaire et que l'une de ses extrémités comporte un gradin (8) qui fait saillie sur l'un de ses long côtés et que la deuxième partie (9) en mousse fait saillie de la première partie (7) et forme un prolongement du gradin (8).

5. Objet de profil constitué de deux matériaux suivant l'une quelconque des revendications précédentes, caractérisé en ce que la deuxième partie (9) sort d'un gradin (8) comportant des bords latéraux arrondis et que la pellicule (10) s'étend tout au long de la surface du gradin (8) jusqu'à ce qu'elle recouvre le gradin sur ses deux côtés (11, 12).

6. Procédé continu destiné à la fabrication d'objets de profil constitués de deux matériaux suivant l'une des revendications 1 à 5, dans lequel:

la masse formant la première partie (7) et la masse susceptible de donner un produit mousse formant la deuxième partie (9) sont extrudées simultanément,
une pellicule (10) est formée tout autour de la deuxième partie (9) et au moins en partie autour de la première partie (7) et
l'object formé de cette manière est soumis à la chaleur pour vulcaniser la première partie (7) et étirer la pellicule extérieure (10) tout autour de la deuxième partie (9).

## Patentansprüche

1. Aus zwei Materialien bestehender Profilgegenstand mit einem ersten Teil (7) aus elastomerem und/oder plastomerem Material und einem zweiten Teil (9) aus Schaummaterial, dadurch gekennzeichnet, daß der zweite Teil (9) Mitteln für seine Verankerung an dem genannten ersten Teil (7) versehen ist, und daß diese Mittel durch eine Haut (10) gargestellt sind, welche den zweiten Teil (9) vollständig und den ersten Teil (7) wenigstens teilweise bedeckt.

2. Aus zwei Materialien bestehender Profilgegenstand nach Anspruch 1, dadurch gekennzeichnet, daß der erste Teil (7) eine Masse aus einem elastomeren und einem plastomeren Material auf der Basis eines Styrolpolymeren, eines Terpolymeren E.P.D.M. (Äthylen-Propylen-Dien-Monomere) oder eines natürlichen Kautschuk und Phenolharz aufweist, und daß der zweite Teil (9) eine Masse auf der Basis von E.P.D.M. ist, die ein Blähmittel enthält.

3. Aus zwei Materialien bestehender Profilgegenstand nach Anspruch 1 oder 2, dadurch gekennzeichnet, daß der erste Teil (7) eine Shore-A-Härte von nicht weniger als 95° hat.

4. Aus zwei Materialien bestehender Profilgegenstand nach irgendeinem der vorhergehenden Ansprüche, dadurch gekennzeichnet, daß der erste Teil (7) im wesentlichen rechtwinklige Gestalt hat und an einem seiner Enden mit einer Stufe (8) versehen ist, die von einer seiner größeren Seiten vorragt, und daß der zweite Teil (9) aus Schaummaterial von dem ersten Teil (7) vorragt une eine Verlängerung der Stufe (8) bildet.

5. Aus zwei Materialien bestehender Profilgegenstand nach irgeneinem der vorhergehenden Ansprüche, dädurch gekennzeichnet, daß der zweite Teil (9) von einer Stufe (8) ausgeht, die mit seitlich abgerundeten Kanten versehen ist, und daß die Haut (10) sich entlang der Fläche der Stufe (8) erstreckt, bis sie die Stufe auf deren beiden Seiten (11, 12) bedeckt.

6. Kontinuierliches Verfahren sum Herstellen von aus zwei Materialien bestehenden Profilgegenständen nach einem der Ansprüche 1 bis 5, bei welchem:

die den ersten Teil (7) bildende Masse und die den zweiten Teil (9) bildente schäumbare Masse gleichzeitig extrudiert werden,
eine Haut (10) rund um den zweiten Teil (9) und wenigstens teilweise rund um den ersten Teil (7) gebildet wird, und
der auf diese Weise gebildete Gegenstand Wärme unterworfen wird, um den ersten Teil (7) zu vulkanisieren und gleichzeitig die äußere Haut (10) rund um den zweiten Teil (9) zu ziehen.

0 040 824

## Fig.1

## Fig.2

a)    b)    c)

## Fig.3